# FASCICULE DE BREVET EUROPEEN

(11) **EP 3 027 715 B1**
(45) Date de publication et mention de la délivrance du brevet: **06.09.2017**
(21) Numéro de dépôt: 14767132.5
(22) Date de dépôt: 30.07.2014
(51) Int. Cl.: C01B 3/50, C25B 15/08, C25B 3/04, F23L 7/00, C10K 1/00, C10G 2/00

(54) **PROCEDE DE CONVERSION THERMOCHIMIQUE D'UNE CHARGE CARBONEE EN GAZ DE SYNTHESE CONTENANT MAJORITAIREMENT H2 ET CO**
VERFAHREN ZUM THERMOCHEMISCHER UMZETZUNG VON EINEM KOHLENSTOFFHALTIGEN MATERIAL IN EINEM SYNTHESEGAS, DAS HAUPTSÄCHLICH H2 UND CO ENTHÄLT
METHOD TO THERMOCHEMICALLY CONVERT A CARBONACEOUS FEEDSTOCK INTO SYNTHESIS GASES CONTAINING MAINLY H2 AND CO

(30) Priorité: 01.08.2013 FR 1357631
(43) Date de publication de la demande: 08.06.2016
(73) Titulaire: Commissariat à l'Énergie Atomique et aux Énergies Alternatives, 75015 Paris (FR)
(72) Inventeur: CASTELLI, Pierre, F-38330 Saint Nazaire Les Eymes (FR); BOISSONNET, Guillaume, F-38100 Grenoble (FR)
(74) Mandataire: Nony
(86) Numéro de dépôt international: PCT/IB2014/063543
(87) Numéro de publication internationale: WO 2015/015433

(56) Documents cités:
- WO-A1-2012/003849
- WO-A1-2013/064552
- US-A1- 2011 041 740
- QINGXI FU ET AL: "Syngas production via high-temperature steam/CO2 co-electrolysis: an economic assessment", ENERGY & ENVIRONMENTAL SCIENCE, vol. 3, no. 10, 1 janvier 2010 (2010-01-01), page 1382, XP055028296, ISSN: 1754-5692, DOI: 10.1039/c0ee00092b
- Carl M Stoots: "High-Temperature Co- Electrolysis of H 2 O and CO 2 for Syngas Production 2006 Fuel Cell Seminar", , 1 novembre 2006 (2006-11-01), XP055096660, Extrait de l'Internet: URL:http://www.inl.gov/technicalpublicatio ns/Documents/3562841.pdf [extrait le 2014-01-15]

## Description

### Domaine technique

La présente invention concerne un nouveau procédé de conversion thermochimique d'une charge carbonée en gaz de synthèse contenant majoritairement de l'hydrogène (H₂) et du monoxyde de carbone (CO), en vue de produire des carburants liquides (Diesel Fischer-Tropsch "FT", Diméthyl éther "DME", Méthanol) ou gazeux (gaz naturel synthétique, "SNG" ou "Synthetic Natural Gas" en anglais) ou autres produits chimiques de synthèse, tels que le méthanol par exemple.

L'application principale visée de l'invention est celle pour laquelle la charge carbonée est de la biomasse.

### Etat de la technique

On désigne sous l'appellation "charge carbonée", tout matériau combustible constitué de composés contenant du carbone.

Il peut donc s'agir de biomasse, c'est-à-dire tout matériau inhomogène d'origine végétale contenant du carbone, tel que de la biomasse ligno-cellulosique, des résidus forestiers ou agricoles (paille), qui peut être quasi-sec ou imbibé d'eau comme les déchets ménagers.

Il peut aussi s'agir d'un combustible d'origine fossile, tel que le charbon.

Il peut aussi s'agir de déchets combustibles d'origine industrielle contenant du carbone, tel que des matières plastiques ou des pneumatiques.

II peut aussi s'agir d'une combinaison de biomasse et de combustible d'origine fossile.

Les procédés actuels en cours d'étude ou à l'échelle de pilote industriel, permettant de convertir par voie thermochimique la biomasse en carburant liquide par une synthèse chimique selon le procédé largement connu sous le nom "procédé Fischer Tropsch", comprennent nécessairement une étape de gazéification de la biomasse à la vapeur d'eau pour obtenir un gaz de synthèse contenant majoritairement du monoxyde de carbone (CO) et de l'hydrogène (H₂).

Le procédé Fischer Tropsch permet alors à partir de CO et d'H₂ d'obtenir des chaînes -CH2- semblables à celle du gasoil selon l'équation suivante :

(2n+1) H₂+nCO→CₙH₂ₙ₊₂+nH₂O.

L'étape de gazéification proprement dite est réalisée en continu à partir de biomasse de nature et de granulométrie différentes stockée habituellement à la pression atmosphérique, dans un réacteur chimique (réacteur de gazéification), soit de type à lit fluidisé soit de type à flux entraîné fonctionnant sous pression.

Les réacteurs de type à lit fluidisé sont d'une efficacité moindre en raison de la température de réaction comprise généralement entre 800.deg.C et 1000.deg.C, qui conduit à une conversion moindre de la biomasse en gaz de synthèse CO et H₂ avec la génération entre autre de méthane (CH4) et de goudrons. Ils ont l'avantage par contre de ne nécessiter qu'un séchage et un broyage de granulométrie moyenne de la biomasse sans autre préparation spécifique. Le séchage et broyage n'induisent qu'une faible perte de rendement du procédé global. Les réacteurs à lit fluidisé peuvent être adaptés pour produire des gaz naturels de synthèse (" SNG ").

Les réacteurs à flux entraîné ont quant à eux un excellent rendement de conversion de la biomasse en gaz de synthèse CO et H2, et sont donc tout à fait appropriés à la production de carburants ou produits chimiques de synthèse à partir de la biomasse. Ils servent donc à ce jour de référence dans le domaine des carburants désignés sous l'appellation en anglais "Biomass to Liquid " (en abrégé BtL). Cependant, ils nécessitent un prétraitement thermique de la biomasse afin que celle-ci puisse être broyée avec une granulométrie fine et injectée aisément, ce qui introduit une perte de masse ou d'énergie et donc une diminution du rendement pour le procédé.

L'apport de chaleur des procédés actuellement connus est fait en général par la combustion d'une partie de la biomasse elle-même (biomasse brute, gaz, résidus solides, goudrons..). Ces procédés sont dits "autothermiques". Dans les procédés autothermiques, une partie du carbone provenant de la biomasse n'est pas donc pas convertie en carburant liquide.

L'apport de chaleur du procédé peut être fait par une source thermique externe, de préférence d'origine électrique nucléaire sans émission de CO₂. Ces procédés sont dits "allothermiques" avec comme avantage un rendement massique supérieur à celui des procédés autothermiques.

Quelle que soit la technologie des réacteurs retenus, et comme mentionné ci-dessus, la gazéification a pour inconvénient majeur de nécessiter une préparation spécifique de la biomasse, comme la torréfaction, qui est consommatrice d'énergie et fait chuter le rendement matière. La demande de brevet US 2009/0235587 divulgue un procédé de production d'un gaz de synthèse à partir de la chaleur produite lors de l'oxydation partielle d'une charge carbonée.

Par ailleurs, il est largement connu d'incinérer des déchets ménagers pour réaliser une cogénération d'électricité et de chaleur. En outre, il a déjà été envisagé de réaliser une oxycombustion de déchets ménagers : voir [1].

Enfin, une évaluation technico-économique de différents procédés de transformation de la biomasse en carburant liquide (biocarburant) avec différentes variantes a déjà été faite : une présentation en est donnée dans [2].

La demanderesse a proposé dans WO 2013/064552 un nouveau procédé de conversion d'une charge carbonée en gaz de synthèse contenant majoritairement de l'hydrogène (H₂) et du monoxyde de carbone (CO), dont les évaluations technico-économiques ont montré l'intérêt avec notamment un meilleur rendement énergétique et/ou massique que ceux des procédés actuellement connus et en particulier ceux évalués économiquement dans la publication [2]. Le procédé selon cette demande de brevet WO 2013/064552 a déjà considérablement amélioré le rendement énergétique du procédé de conversion comparativement aux procédés de conversion thermochimique connus qui mettent en oeuvre une gazéification de la charge carbonée.

Le but de l'invention est de proposer un nouveau procédé de conversion thermochimique d'une charge carbonée en gaz de synthèse contenant majoritairement de l'hydrogène (H₂) et du monoxyde de carbone (CO), en vue de produire des carburants liquides ou autres produits chimiques de synthèse, qui améliore encore le meilleur rendement énergétique et/ou massique par rapport au procédé selon la demande de brevet WO 2013/064552.

Un but particulier est de proposer un nouveau procédé de conversion thermochimique d'une charge carbonée en gaz de synthèse qui permette de réduire le coût d'investissement par rapport au procédé selon la demande de brevet WO 2013/064552.

### Exposé de l'invention

Pour ce faire, l'invention a pour objet un procédé de conversion d'une charge carbonée en gaz de synthèse contenant majoritairement de l'hydrogène (H₂) et du monoxyde de carbone (CO), comprenant les étapes suivantes :
a/ oxycombustion de la charge carbonée pour faire une cogénération d'électricité et de chaleur ;
b/ électrolyse simultanée d'eau et dioxyde de carbone (CO₂) à haute température (EHT), dite co-électrolyse, à partir au moins de la chaleur produite selon l'étape a/ et au moins du dioxyde de carbone (CO2) produit selon l'étape a/.

Selon un mode de réalisation avantageux, le procédé comprend en outre une étape c/ de nettoyage et de séparation des gaz, permettant d'extraire l'hydrogène (H2) et le monoxyde de carbone (CO) produits selon l'étape b/, ou le cas échéant de l'hydrogène (H2) et le monoxyde de carbone (CO) produits séparément selon l'étape b/, de sorte à extraire uniquement CO et H₂ produits.

De préférence, le dioxyde de carbone (CO₂) séparé selon l'étape c/ est injecté en tant que produit d'entrée à la co-électrolyse selon l'étape b/.

De préférence encore, l'eau (H₂O) séparée du gaz selon l'étape c/ est recyclée et injectée en tant que produit d'entrée de la co-électrolyse selon l'étape b/.

Selon un mode de réalisation avantageux, le monoxyde de carbone (CO) et l'hydrogène (H₂) séparés selon l'étape c/ sont injectés en tant que produits d'entrée d'une étape d/ selon laquelle on réalise une synthèse Fischer-Tropsch (FT) pour obtenir un carburant liquide.

Avantageusement, l'eau (H20) issue de la synthèse Fischer Tropsch FT selon l'étape d/ est recyclée et injectée en tant que produit d'entrée de la co-électrolyse selon l'étape b/.

Selon un mode de réalisation avantageux, le gaz de tête de la synthèse FT selon l'étape d/ est injecté en tant que produit d'entrée de l'oxycombustion selon l'étape a/ et/ou de la co-électrolyse selon l'étape b/ en plus de l'eau et du CO₂. Le gaz de tête de la synthèse FT est constitué principalement de méthane CH4.

L'injection du gaz de tête dans le réacteur d'oxycombustion selon l'étape a/, contribue ainsi de manière avantageuse à la production de chaleur et d'électricité.

La chaleur générée par la synthèse FT selon l'étape d/ peut servir de préférence à la production de vapeur d'eau en entrée de la co-électrolyse selon l'étape b/.

Selon un autre mode de réalisation également avantageux, le gaz de tête peut être utilisé de manière indépendante par exemple injecté dans une turbine à gaz ou un moteur pour produire de l'électricité et de la chaleur, cette électricité et chaleur pouvant être avantageusement être utilisée(s) dans l'étape de co-électrolyse b/.

Selon un autre mode de réalisation avantageux, la co-électrolyse selon l'étape b/ est mise en oeuvre conformément à la demande de brevet déposée en France le 17 décembre 2012 sous le n° 12 62174 au nom de la Demanderesse.

Ainsi, selon ce mode avantageux, l'étape b/ est mise en oeuvre dans un réacteur d'électrolyse comportant un empilement de cellules d'électrolyse élémentaires de type SOEC formées chacune d'une cathode, d'une anode et d'un électrolyte intercalé entre la cathode et l'anode, et une pluralité d'interconnecteurs électrique et fluidique agencés chacun entre deux cellules élémentaires adjacentes avec une de ses faces en contact électrique avec l'anode d'une des deux cellules élémentaires et l'autre de ses faces en contact électrique avec la cathode de l'autre des deux cellules élémentaires, étape b/ de co-électrolyse selon laquelle on alimente et on distribue la vapeur d'eau, et le cas échéant le gaz de tête de la synthèse FT à la cathode d'une des deux cellules élémentaires adjacentes et on alimente et on distribue du dioxyde de carbone soit du dioxyde d'azote à la cathode de l'autre des deux cellules élémentaires.

Autrement dit, selon ce mode avantageux, la co-électrolyse selon l'étape b/ consiste avantageusement en une co-électrolyse de CO₂ et H₂O mais qui est séparée au sein du réacteur d'électrolyse. On obtient ainsi en sortie du réacteur les gaz CO et H₂ qui sont séparés, évitant ainsi les réactions en phase gaz entre le CO et l'H₂ en sortie de l'électrolyseur, la récupération de l'oxygène produit pouvant quant à elle être commune.

Grâce à ce mode, la composition des gaz en sortie de réacteur d'électrolyse (EHT) peut être théoriquement de 12.66 moles de H2 et 6 moles de CO par exemple pour 1 mole de biomasse de composition C₆H_{8,6}O_{3,65}, ce qui permettrait d'obtenir encore un meilleur rendement en gaz de synthèse et donc en biocarburant.

Selon un mode de réalisation avantageux, la co-électrolyse de l'étape b/ est en outre réalisée à partir de l'électricité produite selon l'étape a/. On augmente encore le rendement du procédé car il n'y a moins d'électricité externe au procédé à apporter.

L'invention telle que définie permet de conserver les avantages du procédé selon la demande de brevet WO 2013/064552 tout en améliorant son rendement énergétique qui peut être défini comme le rapport entre le contenu énergétique du produit obtenu en sortie du procédé par l'énergie introduite dans le procédé (énergie contenue dans la charge carbonée, telle que biomasse + énergie électrique externe injectée).

En effet, comparativement à la demande WO 2013/064552, le procédé de conversion selon l'invention permet de supprimer l'étape de réaction inverse du gaz à l'eau (RWGS abréviation en anglais pour *Reverse Water Gas Shift*) et mettre à profit la flexibilité d'un réacteur à haute température pour la co-électrolyse afin d'optimiser les flux de chaleur et d'électricité produits.

De plus, le fait de n'utiliser que des gaz carbonés en injection dans le réacteur de co-électrolyse permet d'augmenter la durée de vie de l'installation car ces gaz sont propres puisqu'ils passent par des étapes de purification avant injection ou recyclage.

En outre, le fait de supprimer l'étape de RWGS permet de réduire le coût d'investissement global ainsi que sur le coût d'exploitation d'une installation mettant en oeuvre le procédé et donc au final sur le coût de production du produit final en particulier un biocarburant (BtL).

Selon une variante, tout l'oxygène produit par la co-électrolyse selon l'étape b/ est utilisé en tant que comburant de l'étape a/ d'oxycombustion.

Alternativement, seule une partie de l'oxygène produit par la co-électrolyse selon l'étape b/ est utilisée en tant que comburant de l'étape a/ d'oxycombustion, l'autre partie étant récupérée.

Le procédé s'applique avantageusement à une charge carbonée qui est de la biomasse, de préférence de la biomasse ligno-cellulosique avec de préférence un taux d'humidité de biomasse inférieur à 50%.

L'oxycombustion de la biomasse produit de l'eau et du CO₂, cette eau peut être recyclée dans le procédé selon l'invention et elle est suffisante en quantité pour celui-ci. La biomasse doit être donc suffisamment sèche, car l'eau contenue dans la biomasse va être chauffée inutilement et donc faire baisser le rendement du procédé. Aussi, un taux d'humidité inférieur à 50% est avantageux.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- la figure 1 est un schéma du principe d'un mode de réalisation du procédé selon l'invention ;
- la figure 2 reprend en partie le schéma de la figure 1 en y intégrant les bilans de matière, c'est-à-dire les espèces produites ou consommées à chaque étape du procédé ;
- la figure 3 est une vue schématique en coupe d'un réacteur d'électrolyse mettant en oeuvre le procédé de co-électrolyse à haute température simultanée de la vapeur d'eau H₂O et du dioxyde de carbone CO₂, avec les deux flux séparés, dans le procédé selon l'invention.

On précise que l'ensemble des flux gazeux considérés dans le procédé selon l'invention tel que décrit ci-après reste si possible à la même température, un refroidissement du gaz en sortie de l'étape d'oxycombustion et/ou en sortie de la co-électrolyse pouvant être nécessaire.

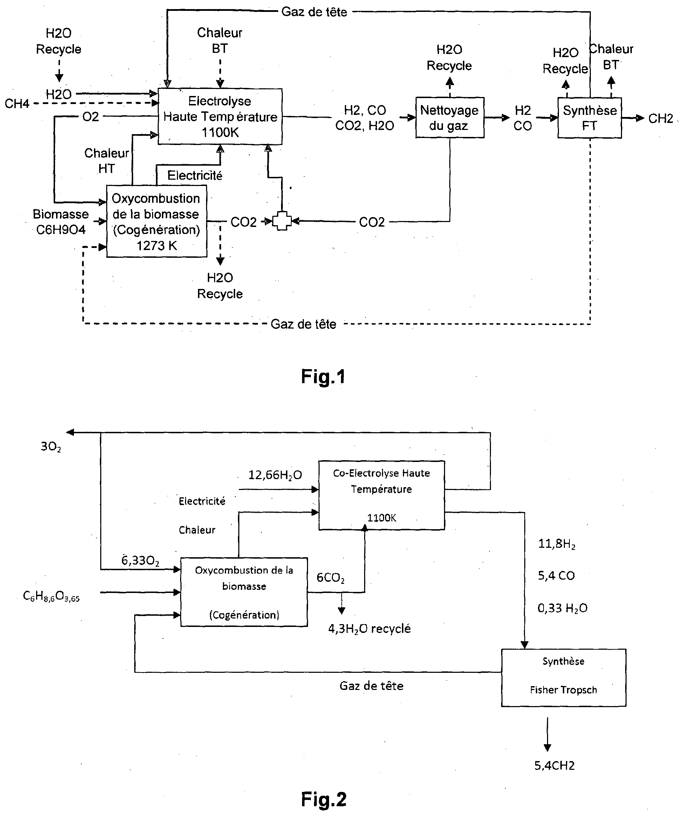

Comme mieux visible en figure 1, le procédé de conversion thermochimique de la biomasse ligno-cellulosique C6H9O4 en entrée selon l'invention consiste à réaliser les étapes suivantes en combinaison :
a/ une oxycombustion de la biomasse, de préférence à des températures de l'ordre de 1273 K pour faire une cogénération de chaleur à des hautes températures de l'ordre de 1100 K et d'électricité. De préférence, on réalise cette étape a/ d'oxycombustion dans un réacteur de cogénération de type à lit fluidisé.
b/ une co-électrolyse de l'eau et du dioxyde de carbone à hautes températures (EHT), de préférence à des températures proches de 1100 K, la co-électrolyse EHT étant réalisée par apport de toute la chaleur et de toute l'électricité produite par la cogénération selon l'étape a/ et de tout le dioxyde de carbone (CO₂) produit selon l'étape a/.

Comme indiqué en pointillés sur les figures 1 et 2, l'eau produite selon l'oxycombustion peut être recyclée et injectée en tant que produit d'entrée de l'électrolyse selon l'étape b/.

Selon une étape c/ ultérieure, on réalise un nettoyage du gaz produit pour valoriser essentiellement le CO et l'H2 nécessaire à la synthèse Fischer-Tropsch FT avec une séparation de l'eau produite et éventuellement du CO₂. Comme indiqué en pointillés sur les figures 1 et 2, l'eau produite peut éventuellement être réinjectée dans le réacteur mettant en oeuvre l'étape b/ de co-électrolyse haute température EHT.

Enfin selon une étape d/, le gaz de synthèse CO+H₂ nettoyé sert d'intermédiaire réactionnel de base pour la production de produits de synthèses (carburants liquides (Diesel FT, " DME ", Méthanol) ou gazeux (" SNG "), ou produits chimiques de synthèse tels que le méthanol par exemple). Par exemple, il permet d'obtenir un carburant liquide par synthèse Fisher Tropsch.

Comme illustré en pointillés sur la figure 1, le gaz de tête produit peut être recyclé et injecté en tant qu'entrée de l'oxycombustion selon l'étape a/ et/ou de co-électrolyse selon l'étape b/. De même, l'eau produite lors de la synthèse FT peut être recyclée et injectée en entrée de la co-électrolyse et la chaleur dégagée par la synthèse, même à des températures moindres (BT), typiquement comprise entre 200 et 300°C, peut servir à la co-électrolyse selon l'étape b/. Au final, les chaînes d'hydrocarbures, de formule moyenne -CH2- produites servent en tant que carburant liquide qui peut être désigné usuellement comme un biocarburant.

Les inventeurs ont fait des calculs sur le procédé de conversion thermochimique de la biomasse selon l'invention qui vient d'être décrit. Plus précisément des premiers calculs de bilan matière et d'énergie ont été faits afin d'évaluer les performances du procédé.

Un exemple de bilan des espèces consommées ou produites est représenté de manière synoptique sur le schéma de la figure 2, sur la base d'une mole de biomasse C₆H_{8,6}O_{3,65} injectée en entrée du procédé.

On précise ici que les valeurs indiquées sont des valeurs théoriques avec des réactions totales.

On précise également que pour la co-électrolyse selon l'étape b/, l'hydrogène H₂ et le monoxyde de carbone CO sont produits simultanément dans le réacteur de co-électrolyse et qu'ils réagissent ensemble pour donner un mélange de gaz correspondant à l'équilibre thermodynamique à la température de l'électrolyseur.

Le schéma de la figure 2 donne les compositions en gaz en sortie de du réacteur mettant en oeuvre cette co-électrolyse simultanée avec CO₂ et H₂0 mélangés au sein du réacteur.

En première approximation, les valeurs du calcul à l'équilibre thermodynamique à 1100K montrent qu'avec 6 moles de CO₂ (produits à partir de l'oxycombustion d'une mole de biomasse selon l'étape a/), et de 12,66 moles de H₂O en entrée de la co-électrolyse à haute températures, on obtient par la réaction de co-électrolyse en sortie 11,8 moles de H2 et 5,4 moles de CO, avec un rapport molaire H₂/CO proche de 2 nécessaire pour la synthèse FT.

On précise également que dans le cas de la co-électrolyse avec les flux séparés de H2O et CO2 selon l'invention conformément à la demande de brevet déposée en France le 17 décembre 2012 sous le n° 12 62174 au nom de la Demanderesse, on obtient les valeurs théoriques maximales de 12,66 moles de H2 et de 6 moles de CO.

Ainsi, on constate que les quantités de H2 et CO obtenues avec la co-électrolyse selon l'étape b/ de l'invention sont plus importantes que celles obtenues suivant le procédé de conversion comprenant une étape RWGS comme décrit dans la demande de brevet WO 2013/064552. Par contre, l'énergie électrique à fournir au réacteur de co-électrolyse selon l'invention est plus importante.

De préférence, afin notamment d'éviter les réactions chimiques entre H₂ et CO produits au sein d'un réacteur mettant en oeuvre la co-électrolyse selon l'étape b/, on réalise cette dernière comme décrit et revendiqué dans la demande de brevet déposée en France le 17 décembre 2012 sous le n° 12 62174.

Ainsi, on réalise dans un même réacteur la co-électrolyse simultanée de vapeur d'eau et de dioxyde de carbone mais de manière séparée.

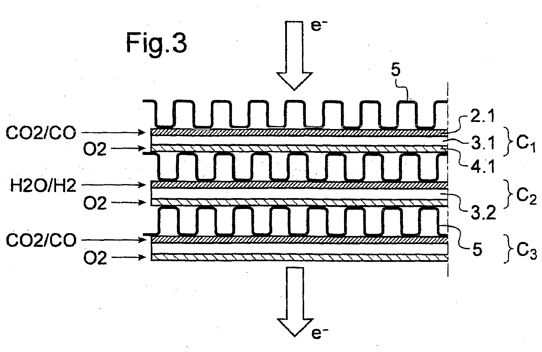

On a représenté de manière schématique en figure 3, un électrolyseur haute température à oxydes solides (SOEC) permettant en son sein la co-électrolyse selon l'étape b/, c'est-à-dire une électrolyse simultanée de la vapeur d'eau et du dioxyde de carbone, chaque électrolyse ayant lieu simultanément mais de manière séparée dans une des cellules d'électrolyse élémentaires.

Plus précisément, l'étape de co-électrolyse à haute température de la vapeur d'eau H₂O et du dioxyde de carbone CO₂ est mis en oeuvre par un réacteur b/ comportant un empilement de cellules d'électrolyse élémentaires de type SOEC, C1, C2, C3 formées chacune d'une cathode 2.1, 2.2, 2.3, d'une anode 4.1, 4.2, 4.3 et d'un électrolyte 3.1, 3.2, 3.3, intercalé entre la cathode et l'anode, et une pluralité d'interconnecteurs 5 électrique et fluidique agencés chacun entre deux cellules élémentaires adjacentes avec une de ses faces en contact électrique avec l'anode d'une des deux cellules élémentaires et l'autre de ses faces en contact électrique avec la cathode de l'autre des deux cellules élémentaires.

Comme illustré en figure 3, on alimente et on distribue la vapeur d'eau à la cathode 2.1, 2.3 d'une C1 ou C3 des deux cellules C1, C2 ; C2, C3 élémentaires adjacentes et on alimente et on distribue du dioxyde de carbone à la cathode 2.2 de l'autre C2 des deux cellules élémentaires C1, C2 ; C2, C3.

Dans un tel réacteur, tous les compartiments cathodiques dans lesquels circulent la vapeur d'eau alimentée H₂O et l'hydrogène produit H₂ communiquent entre eux.

De même, tous les compartiments cathodiques dans lesquels circulent le dioxyde de carbone injecté CO₂ et le monoxyde de carbone produit CO communiquent entre eux, mais sont complètement isolés des compartiments dédiés à la vapeur d'eau H₂O et à l'hydrogène produit H₂.

Enfin, les deux réactions d'électrolyse simultanées mais séparées produisent toutes deux de l'oxygène qui est récolté par tous les compartiments anodiques qui communiquent entre eux, quelle que soit la réaction concernée.

Ainsi, pour réaliser avantageusement l'étape de co-électrolyse selon l'étape b/, on alimente et on distribue la vapeur d'eau produisant l'hydrogène dans des compartiments cathodiques séparés de ceux dans lesquels on alimente le dioxyde de carbone CO₂ produisant le monoxyde de carbone et on récupère tout l'oxygène produit par les deux réactions d'électrolyse dans des compartiments anodiques.

D'autres améliorations et variantes peuvent être prévues sans pour autant sortir du cadre de l'invention.

Bien que décrite en référence exclusivement à la biomasse à convertir en un carburant liquide ou un autre produit de synthèse, l'invention peut être utilisée pour la conversion d'autres charges de matière carbonée (charbon, petcoke...).

### REFERENCES CITEES

[1] : Technique de l'ingénieur Manuel G2051 *"Traitements thermiques des déchets*", paragraphe 3 *"procédé d'oxycombustion* ", Gérard Antonini ;
[2] : "Technical and economical évaluation of enhanced biomass to liquid fuel processes", Jean-Marie Seiler, Carole Hohwiller, Juliette Imbach, Jean-François Luciani, Energy, 35, 3587-3592, (2010).

## Revendications

1. Procédé de conversion thermochimique d'une charge carbonée en gaz de synthèse contenant majoritairement de l'hydrogène (H₂) et du monoxyde de carbone (CO), comprenant les étapes suivantes :
a/ oxycombustion de la charge carbonée pour faire une cogénération d'électricité et de chaleur ;
b/ électrolyse simultanée d'eau et dioxyde de carbone (CO₂) à haute température (EHT), dite co-électrolyse, à partir au moins de la chaleur produite selon l'étape a/ et au moins du dioxyde de carbone (CO₂) produit selon l'étape a/.

2. Procédé de conversion thermochimique d'une charge carbonée en gaz de synthèse selon la revendication 1, comprenant en outre une étape c/ de nettoyage et de séparation des gaz, permettant d'extraire permettant d'extraire l'hydrogène (H₂) et le monoxyde de carbone (CO) produits selon l'étape b/, ou le cas échéant de l'hydrogène (H₂) et le monoxyde de carbone (CO) produits séparément selon l'étape b/, de sorte à extraire uniquement CO et H₂ produits.

3. Procédé de conversion thermochimique d'une charge carbonée en gaz de synthèse selon la revendication 2, selon lequel le dioxyde de carbone (CO₂) séparé selon l'étape c/ est injecté en tant que produit d'entrée à la co-électrolyse selon l'étape b/.

4. Procédé de conversion thermochimique d'une charge carbonée en gaz de synthèse selon la revendication 2 ou 3, selon lequel l'eau (H₂O) séparée du gaz selon l'étape c/ est recyclée et injectée en tant que produit d'entrée de la co-électrolyse selon l'étape b/.

5. Procédé de conversion thermochimique d'une charge carbonée en gaz de synthèse selon l'une des revendications 2 à 4, selon lequel le monoxyde de carbone (CO) et l'hydrogène (H₂) séparés selon l'étape c/ sont injectés en tant que produits d'entrée d'une étape d/ selon laquelle on réalise une synthèse Fischer-Tropsch (FT) pour obtenir un carburant liquide.

6. Procédé de conversion thermochimique d'une charge carbonée en gaz de synthèse selon la revendication 5, selon lequel l'eau (H₂O) issue de la synthèse Fischer Tropsch FT selon l'étape d/ est recyclée et injectée en tant que produit d'entrée de la co-électrolyse selon l'étape b/.

7. Procédé de conversion thermochimique d'une charge carbonée en gaz de synthèse selon l'une des revendications 5 ou 6, selon lequel le gaz de tête de la synthèse FT selon l'étape d/ est injecté en tant que produit d'entrée de oxycombustion selon l'étape a/ et/ou de la co-électrolyse selon l'étape b/.

8. Procédé de conversion thermochimique d'une charge carbonée en gaz de synthèse selon l'une des revendications 5 ou 6, selon lequel le gaz de tête de la synthèse FT selon l'étape d/ est utilisé de manière indépendante, par exemple injecté dans une turbine à gaz ou un moteur pour produire de l'électricité et de la chaleur.

9. Procédé de conversion thermochimique d'une charge carbonée en gaz de synthèse selon la revendication 8, selon lequel la chaleur et l'électricité produits sont utilisés dans l'étape b/ de co-électrolyse.

10. Procédé de conversion thermochimique d'une charge carbonée en gaz de synthèse selon l'une des revendications 5 à 9, selon lequel la chaleur générée par la synthèse FT selon l'étape d/ sert à la production de vapeur d'eau en entrée de co-électrolyse selon l'étape b/.

11. Procédé de conversion thermochimique d'une charge carbonée en gaz de synthèse selon l'une des revendications précédentes, selon lequel la co-électrolyse selon l'étape b/ est mise en oeuvre dans un réacteur d'électrolyse (1) comportant un empilement de cellules d'électrolyse élémentaires (C1, C2, C3) de type SOEC formées chacune d'une cathode (2.1, 2.2, ...), d'une anode (4.1, 4.2, ...) et d'un électrolyte (3.1, 3.2...) intercalé entre la cathode et l'anode, et une pluralité d'interconnecteurs (5) électrique et fluidique agencés chacun entre deux cellules élémentaires (C1, C2) adjacentes avec une de ses faces en contact électrique avec l'anode (4.1) d'une (C1) des deux cellules élémentaires et l'autre de ses faces en contact électrique avec la cathode (2.2) de l'autre des deux cellules (C2) élémentaires, étape b/ de co-électrolyse selon laquelle on alimente et on distribue la vapeur d'eau, et le cas échéant le gaz de tête de la synthèse FT à la cathode d'une des deux cellules élémentaires adjacentes et on alimente et on distribue du dioxyde de carbone soit du dioxyde d'azote à la cathode de l'autre des deux cellules élémentaires.

12. Procédé de conversion thermochimique d'une charge carbonée en gaz de synthèse selon l'une des revendications précédentes, selon lequel la co-électrolyse de l'étape b/ est en outre réalisée à partir de l'électricité produite selon l'étape a/.

13. Procédé de conversion thermochimique d'une charge carbonée en gaz de synthèse selon l'une des revendications précédentes, selon lequel tout l'oxygène produit par la co-électrolyse selon l'étape b/ est utilisé en tant que comburant de l'étape a/ d'oxycombustion.

14. Procédé de conversion thermochimique d'une charge carbonée en gaz de synthèse selon l'une des revendications précédentes, selon lequel seule une partie de l'oxygène produit par la co-électrolyse selon l'étape b/ est utilisée en tant que comburant de l'étape a/ d'oxycombustion, l'autre partie étant récupérée.

15. Procédé de conversion thermochimique d'une charge carbonée en gaz de synthèse selon l'une des revendications précédentes, selon lequel la charge carbonée est de la biomasse, de préférence de la biomasse ligno-cellulosique, selon lequel le taux d'humidité de biomasse est de préférence inférieur à 50%.

## Patentansprüche

1. Verfahren zur thermochemischen Umsetzung einer kohlenstoffhaltigen Charge in Synthesegas, das mehrheitlich Wasserstoff (H₂) und Kohlenmonoxid (CO) enthält, mit den folgenden Schritten:
a/ oxidative Verbrennung der kohlenstoffhaltigen Charge zur gemeinsamen Erzeugung von Elektrizität und Wärme;
b/ gleichzeitige Elektrolyse von Wasser und Kohlendioxid (CO₂) bei hoher Temperatur (EHT), als Co-Elektrolyse bezeichnet, auf Basis von zumindest der in Schritt a/ erzeugten Wärme und zumindest dem in Schritt a/ erzeugten Kohlendioxid (CO₂).

2. Verfahren zur thermochemischen Umsetzung einer kohlenstoffhaltigen Charge in Synthesegas gemäß Anspruch 1, mit einem weiteren Schritt in der Reinigung und der Trennung der Gase, was es gestattet, den Wasserstoff (H₂) und das Kohlenmonoxid (CO), die gemäß Schritt b/ erzeugt wurden, oder gegebenenfalls den Wasserstoff (H₂) und das Kohlenmonoxid (CO), die getrennt gemäß Schritt d/ erzeugt wurden, zu extrahieren, so dass ausschließlich CO und H₂ Produkte extrahiert werden.

3. Verfahren zur thermochemischen Umsetzung einer kohlenstoffhaltigen Charge in Synthesegas nach Anspruch 2, bei dem das gemäß Schritt c/ abgetrennte Kohlendioxid (CO₂) als Eingangsprodukt der Co-Elektrolyse gemäß Schritt b/ injiziert wird.

4. Verfahren zur thermochemischen Umsetzung einer kohlenstoffhaltigen Charge in Synthesegas gemäß Anspruch 2 oder 3, bei dem das gemäß Schritt c/ von dem Gas getrennte Wasser (H₂O) rezirkuliert und als Eingangsprodukt der Co-Elektrolyse gemäß Schritt b/ injiziert wird.

5. Verfahren zur thermochemischen Umsetzung einer kohlenstoffhaltigen Charge in Synthesegas gemäß einem der Ansprüche 2 bis 4, bei dem das Kohlenmonoxid (CO) und der Wasserstoff (H₂), die gemäß Schritt c/ getrennt wurden, als Eingangsprodukte eines Schrittes d/ injiziert werden, in dem eine Fischer-Tropsch (FT) Synthese ausgeführt wird, um einen flüssigen Treibstoff zu gewinnen.

6. Verfahren zur thermochemischen Umsetzung einer kohlenstoffhaltigen Charge in Synthesegas gemäß Anspruch 5, bei dem das bei der Fischer-Tropsch (FT) Synthese gemäß Schritt d/ freigesetzte Wasser (H₂O) rezirkuliert und als Eingangsprodukt der Co-Elektrolyse gemäß Schritt b/ injiziert wird.

7. Verfahren zur thermochemischen Umsetzung einer kohlenstoffhaltigen Charge in Synthesegas gemäß einem der Ansprüche 5 oder 6, bei dem das Kopfgas der FT-Synthese gemäß Schritt d/ als Eingangsprodukt der oxidativen Verbrennung gemäß Schritt a/ und/oder der Co-Elektrolyse gemäß Schritt b/ injiziert wird.

8. Verfahren zur thermochemischen Umsetzung einer kohlenstoffhaltigen Charge in Synthesegas nach einem der Ansprüche 5 oder 6, bei dem das Kopfgas der FT-Synthese gemäß Schritt d/ unabhängig verwendet wird, beispielsweise in eine Gasturbine oder einen Motor injiziert wird, um Elektrizität und Wärme zu erzeugen.

9. Verfahren zur thermochemischen Umsetzung einer kohlenstoffhaltigen Charge in Synthesegas gemäß Anspruch 8, bei dem die erzeugte Wärme und Elektrizität in dem Schritt b/ der Co-Elektrolyse verwendet werden.

10. Verfahren zur thermochemischen Umsetzung einer kohlenstoffhaltigen Charge in Synthesegas gemäß einem der Ansprüche 5 bis 9, bei dem die durch die FT-Synthese gemäß Schritt d/ erzeugte Wärme zur Produktion von Wasserdampf am Eingang der Co-Elektrolyse gemäß Schritt b/ dient.

11. Verfahren zur thermochemischen Umsetzung einer kohlenstoffhaltigen Charge in Synthesegas gemäß einem der vorstehenden Ansprüche, bei dem die Co-Elektrolyse gemäß Schritt b/ in einem Elektrolysereaktor (1) ausgeführt wird, der einen Stapel vom elementaren SOEC Elektrolysezellen (C1, C2, C3), die jeweils eine Kathode (2.1, 2.2., ...), eine Anode (4.1, 4.2, ...) und einen zwischen der Kathode und der Anode eingefügten Elektrolyten (3.1, 3.2, ....) haben, und mehrere elektrische und fluidische Verbinder (5) aufweist, die jeweils zwischen zwei benachbarten elementaren Elektrolysezellen (C1, C2) angeordnet sind und mit einer ihrer Seiten mit der Anode (4.1) einer (C1) der beiden elementaren Elektrolysezellen und mit der anderen ihrer Seiten mit der Kathode (2.2) der anderen der beiden Elektrolysezellen (C2) in elektrischem Kontakt stehen, wobei man in dem Schritt b/ der Co-Elektrolyse den Wasserdampf und gegebenenfalls das Kopfgas der FT-Synthese zu der Kathode der einen der beiden benachbarten elementaren Elektrolysezellen zuführt und verteilt und das Kohlendioxid oder gegebenenfalls das Stickstoffdioxid zu der Kathode der anderen der beiden elementaren Elektrolysezellen zuführt und verteilt.

12. Verfahren zur thermochemischen Umsetzung einer kohlenstoffhaltigen Charge in Synthesegas gemäß einem der vorstehenden Ansprüche, bei dem die Co-Elektrolyse gemäß Schritt d/ auf Basis der in Schritt a/ erzeugten Elektrizität ausgeführt wird.

13. Verfahren zur thermochemischen Umsetzung einer kohlenstoffhaltigen Charge in Synthesegas gemäß einem der vorstehenden Ansprüche, bei dem der gesamte Sauerstoff, der durch die Co-Elektrolyse gemäß Schritt b/ erzeugt wird, als Brennstoff in dem Schritt a/ der oxidativen Verbrennung verwendet wird.

14. Verfahren zur thermochemischen Umsetzung einer kohlenstoffhaltigen Charge in Synthesegas gemäß einem der vorstehenden Ansprüche, bei dem nur ein Teil des durch die Co-Elektrolyse in Schritt b/ erzeugten Sauerstoffs als Brennstoff in dem Schritt a/ der oxidativen Verbrennung verwendet wird, während der andere Teil zurückgewonnen wird.

15. Verfahren zur thermochemischen Umsetzung einer kohlenstoffhaltigen Charge in Synthesegas gemäß einem der vorstehenden Ansprüche, bei dem die kohlenstoffhaltige Charge Biomasse ist, vorzugsweise Biomasse auf Ligno-Zellulosebasis, wobei der Feuchtigkeitsanteil der Biomasse vorzugsweise kleiner als 50 % ist.

## Claims

1. Method to thermochemically convert a carbonaceous feedstock into synthesis gases containing mainly hydrogen (H₂) and carbon monoxide (CO), comprising the following steps:
a/ oxycombustion of the carbonaceous feedstock for cogeneration of electricity and heat;
b/ simultaneous electrolysis of water and carbon dioxide (CO₂) at high temperature (EHT), called co-electrolysis, starting from at least the heat produced according to step a/ and at least the carbon dioxide (CO₂) produced according to step a/.

2. Method to thermochemically convert a carbonaceous feedstock into synthesis gases according to claim 1, also comprising a step c/ for cleaning and separating gases, allowing the hydrogen (H₂) and carbon monoxide (CO) produced according to step b/, or if appropriate the hydrogen (H₂) and carbon monoxide (CO) produced separately according to step b/, to be extracted, so as to extract only the CO and H₂ produced.

3. Method to thermochemically convert a carbonaceous feedstock into synthesis gases according to claim 2, according to which the carbon dioxide (CO₂) separated according to step c/ is injected as an entry product for the co-electrolysis according to step b/.

4. Method to thermochemically convert a carbonaceous feedstock into synthesis gases according to claim 2 or 3, according to which the water (H₂O) separated from the gas according to step c/ is recycled and injected as an entry product for the co-electrolysis according to step b/.

5. Method to thermochemically convert a carbonaceous feedstock into synthesis gases according to one of claims 2 to 4, according to which the carbon monoxide (CO) and hydrogen (H₂) separated according to step c/ are injected as entry products for a step d/, according to which Fischer-Tropsch (FT) synthesis is carried out to obtain a liquid fuel.

6. Method to thermochemically convert a carbonaceous feedstock into synthesis gases according to claim 5, according to which the water (H₂O) from the FT Fischer Tropsch synthesis according to step d/ is recycled and injected as an entry product for the co-electrolysis according to step b/.

7. Method to thermochemically convert a carbonaceous feedstock into synthesis gases according to one of claims 5 or 6, according to which the head gas of the FT synthesis according to step d/ is injected as an entry product for the oxycombustion according to step a/ and/or the co-electrolysis according to step b/.

8. Method to thermochemically convert a carbonaceous feedstock into synthesis gases according to one of claims 5 or 6, according to which the head gas of the FT synthesis according to step d/ is used independently, injected into a gas turbine or motor for producing electricity and heat for example.

9. Method to thermochemically convert a carbonaceous feedstock into synthesis gases according to claim 8, according to which the heat and electricity produced are used in step b/ for co-electrolysis.

10. Method to thermochemically convert a carbonaceous feedstock into synthesis gases according to one of claims 5 to 9, according to which the heat generated by the FT synthesis according to step d/ serves to produce steam entering the co-electrolysis according to step b/.

11. Method to thermochemically convert a carbonaceous feedstock into synthesis gases according to one of the previous claims, according to which the co-electrolysis according to step b/ is put into operation in an electrolysis reactor (1) comprising a stack of elementary electrolysis cells (C1, C2, C3) of the SOEC type, each formed by a cathode (2.1, 2.2, etc.), an anode (4.1, 4,2, etc.) and an electrolyte (3.1, 3.2, etc.) interposed between the cathode and the anode, and a plurality of electrical and fluid interconnectors (5), each arranged between two adjacent elementary cells (C1, C2) with one of its faces in electrical contact with the anode (4.1) of one (C1) of the two elementary cells and the other of its faces in electrical contact with the cathode (2.2) of the other of the two elementary cells (C2), electrolysis step b/, according to which the steam, and if appropriate the head gas of the FT synthesis is supplied and distributed to the cathode of one of the two adjacent elementary cells and the carbon dioxide or nitrogen dioxide to the cathode of the other of the two elementary cells.

12. Method to thermochemically convert a carbonaceous feedstock into synthesis gases according to one of the previous claims, according to which the co-electrolysis of step b/ is also carried out starting from the electricity produced according to step a/.

13. Method to thermochemically convert a carbonaceous feedstock into synthesis gases according to one of the previous claims, according to which any oxygen produced by the co-electrolysis according to step b/ is used as fuel for oxycombustion step a/.

14. Method to thermochemically convert a carbonaceous feedstock into synthesis gases according to one of the previous claims, according to which a part of the oxygen produced by the co-electrolysis according to step b/ is used as fuel in oxycombustion step a/, the other part being recovered.

15. Method to thermochemically convert a carbonaceous feedstock into synthesis gases according to one of the previous claims, according to which the carbonaceosus feedstock is biomass, preferably lignocellulosic biomass, according to which the humidity level of the biomass is preferably less than 50%.
